# EUROPEAN PATENT APPLICATION

(11) **EP 3 190 805 A1**
(43) Date of publication of application: **12.07.2017**
(21) Application number: 16207556.8
(22) Date of filing: 30.12.2016
(51) Int. Cl.: H04R 1/10, H04R 5/033

(54) **RADIOFREQUENCY COMMUNICATION DEVICE**

(30) Priority: 02.01.2016 US 201662274259 P; 19.02.2016 US 201662297506 P
(71) Applicant: Erato (Cayman) Holdings Co., Ltd., 1-1208 Grand Cayman (KY); Mavin Technology Inc, Hsinchu County 302 (TW)
(72) Inventor: HUNG, SU-YU, Chupei City, Hsinchu County, Taiwan 302 (CN); LIAO, CHIA-NAN, Chupei City, Hsinchu County, Taiwan 302 (CN); CHEN, CHEN-CHUN, New Taipei City, Shanxi 235 (CN)
(74) Representative: Cordina, Kevin John

(57) **Abstract**

The present disclosure generally relates to a radiofrequency communication device. The radiofrequency communication device has a rechargeable battery for mobile use and the charging contacts needs specific requirement for volume minimization and user convenience. Additional electrical circuit or integrated chip are also applied for radiofrequency communication and charging control.

## Description

### FIELD

The subject matter herein generally relates to a radiofrequency communication device and the applications thereof.

### BACKGROUND

Wireless connection among electronic devices is getting popular, because the electronic components become more and more compact and the wireless communication technology are well developed. However, the antenna of a wireless electronic device has physical requirements restricting the minimization of wireless electronic devices. Furthermore, the wireless electronic device needs a battery and electrical contacts for recharging and it is impracticable for user behavior if the electrical contacts are designed too small. In addition, a prominent electrical contact is prompt to be short circuited and bad for aesthetics. For another example, a compact electronic device with an antenna may have a problem to accommodate both charging electrodes and an antenna in a limited space where the charging electrodes may have interference effects to the antenna.

In the present disclosure, the problems described above can be solved. The examples shown in the present disclosure are mostly around an earphone and may be applied to other wireless electronic devices.

### SUMMARY

The present disclosure generally relates to a radiofrequency communication device and the applications thereof. The radiofrequency communication device, comprising a transceiver module, a charge controller a charging electrode coupled to the charge controller, an antenna electrode coupled to the transceiver module and the charge controller, a battery coupled to the charge controller and a housing.

### BRIEF DESCRIPTION OF THE DRAWINGS

Many aspects of the present embodiments can be better understood with reference to the following drawings. The components in the drawings are not necessarily drawn to scale, the emphasis instead being placed upon clearly illustrating the principles of the present embodiments. Moreover, in the drawings, like reference numerals designate corresponding parts throughout the several views.
FIG. 1A is an example of a radiofrequency communication device communicating with a wireless terminal.
FIG. 1B is an example of two radiofrequency communication devices communicating with a wireless terminal.
FIG. 2A shows the oblique front view of an example that a housing of a radiofrequency communication device is an earphone housing.
FIG. 2B shows the oblique back view of an example that a housing of a radiofrequency communication device is an earphone housing.
FIG. 3A is a block diagram of a radiofrequency communication device.
FIG. 3B is an exploded view of an example of a radiofrequency communication device.
FIG. 4A is a block diagram of a radiofrequency communication device.
FIG. 4B is an exploded view of an example of a radiofrequency communication device.
FIG. 5 is an example of a radiofrequency communication device comprising a master earphone and a slave earphone and the master earphone communicates with a wireless terminal and the slave earphone.
FIG. 6A is an oblique view of an example of a close loop monopole antenna electrode. FIG. 6B is an oblique view of an example of an open loop monopole antenna electrode. FIG. 6C is an oblique view of an example of a close loop dipole antenna electrode. FIG. 6D is an oblique view of an example of an open loop dipole antenna electrode.
FIG. 7 is a block diagram of an example of a radiofrequency communication device as a wireless earphone.
FIG. 8 is a block diagram of a rechargeable system comprising a rechargeable device and a charging case. The dotted line indicates the electrical connection when the rechargeable device is recharged by the charging case.
FIG. 9A is a lateral view of an example of a rechargeable system comprising a wireless earphone and a charging case comprising a drawer assembly and a containing box. FIG. 9B is an oblique view of an example of a rechargeable system comprising two wireless earphones and a charging case comprising a drawer assembly and a containing box.
Fig. 10A shows a wireless earphone is to be coupled to the dock electrodes assembled on a dock base.
Fig. 10B shows a wireless earphone is to be coupled to the dock electrodes assembled on a dock base.
FIG. 11 shows the working states of the wireless earphone transitioning between different working states.
FIG. 12 shows the working states of the wireless earphone transitioning between different working states by corresponding input modes.
FIG. 13 shows the input modes trigger media control function under media state.
FIG. 14A shows the input modes trigger phone call control function under phone call state when incoming call.
FIG. 14B shows the input modes trigger phone call control function under phone call state when active call.
FIG. 15A shows a charging case having an external power connection port, a first charging indicator and a second charging indicator.
FIG. 15B shows an enlarged view of the external power connection port, the first charging indicator and a second charging indicator.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures and components have not been described in detail so as not to obscure the related relevant feature being described. The drawings are not necessarily to scale and the proportions of certain parts may be exaggerated to better illustrate details and features. The description is not to be considered as limiting the scope of the embodiments described herein.

Several definitions that apply throughout this disclosure will now be presented.

The term "electrode" refers to an electrical conductor and does not limit the shape, material, or function of an electrode to any specific form of electrode. The term "coupled" is defined as connected, whether directly or indirectly through intervening components, and is not necessarily limited to physical connections. The connection can be such that the objects are permanently connected or releasably connected. The connection can be wireless communication via radiofrequency electromagnetic wave. The term "comprising," when utilized, means "including, but not necessarily limited to"; it specifically indicates open-ended inclusion or membership in the so-described combination, group, series and the like.

The present disclosure is described in relation to a radiofrequency communication device and the applications thereof.

The radiofrequency communication device may comprise an antenna electrode, a charging electrode, a transceiver module, a charge controller, a battery, and a housing.

An antenna electrode is an antenna having capability of coupling to an electrode of a battery charger. The antenna electrode may be manufactured by printed circuit technology or by winding and/or welding an electrical conductive wire. The antenna electrode also have a function as an antenna. An antenna is an electrical device which converts electromagnetic wave into electrical power or converts electrical power into electromagnetic wave. The electrical power and the electromagnetic wave carry electrical signals for communication purpose. An antenna receives electrical power from a transceiver module through a transmission line, creates an oscillating electromagnetic field, and then transmits electromagnetic wave. Conversely, an antenna receives electromagnetic wave, converts into electrical power, and deliver the electrical power to a transceiver module through a transmission line. Said electromagnetic wave may have radiofrequency for specific application. For example, Industrial Scientific Medical (ISM) Bands are reserved internationally for communication or other purposes without regulatory limitation. Popular communication standards includes Bluetooth and Wi-Fi, which have frequency range around 2.4GHz.

A charging electrode is configured to form electrical contact pairs with an antenna electrode. The electrical contact pairs provide electrical connection between the battery and the battery charger. A battery may be an alkaline battery, a silver battery, a zinc-air battery, a mercury battery, a lithium battery or the like. The battery may be a button battery. A battery is capable of providing electrical power for the electrical components in a radiofrequency communication device.

A transceiver module is configured to transmit or receive electrical signals from an antenna. The transceiver module may be connected to the antenna through a transmission line to convey electrical signals. The transceiver module may be an integrated electrical system with multiple functional parts and configured to receive electromagnetic signals and to process the received signals into audio signals for the speaker. The electromagnetic signals may have the frequency within Industrial Scientific Medical Band(ISM band), such as 2.4 GHz. Usually, Wi-Fi, Bluetooth, or other proprietary protocol used for the communication between a radiofrequency communication module and a wireless terminal. The transceiver module may comprise multiple electrical components integrated on a printed circuit board, or integrated in a chip scale package.

A charge controller is configured to modulate the electrical properties, for example, electrical current or electrical voltage, during charging process. Also, a charge controller may prevent circuit from electrical overload. The charge controller may be configured as a charge integrated circuit.

A battery is configured to provide electrical power for an earphone. The battery may be a primary battery or a secondary battery. Preferably, a secondary battery is ideal for rechargeability, sufficient energy density, fast charging, and safety. For example, lithium ion battery is suitable for most portable electronic devices. A battery in the earphone features small volume and steady discharge voltage, and a battery in the earphone case features large capacity.

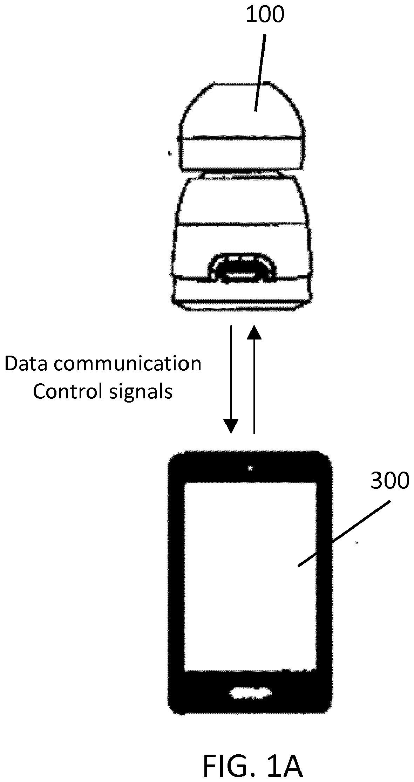

As shown in FIG. 1A, the radiofrequency communication device 100 is configured to communicate with a wireless terminal 300. The radiofrequency communication device 100 is an electronic device configured to communicating with a wireless terminal 300 through radiofrequency communication. The radiofrequency communication device 100 may comprise an antenna electrode, a charging electrode, a transceiver module, a charge controller, a battery, and a housing. The electronic device may be a wireless earphone, an active stylus pen, a remote controller, or a pointer. In the present disclosure, the radiofrequency communication device is able to transmit or receive data via an antenna electrode and to recharge the battery via the antenna electrode and the charging electrode. The wireless terminal 300 comprises at least a processor for managing data and controlling other electronic components of the wireless terminal; a storage for storing data; and a wireless communication module for transmitting the data to and from the radiofrequency communication device. The data may be multimedia files, such as video or audio files, or may be control signals. The wireless terminal may be a wireless storage, a wireless router, a wireless server, or an audio content providing device.

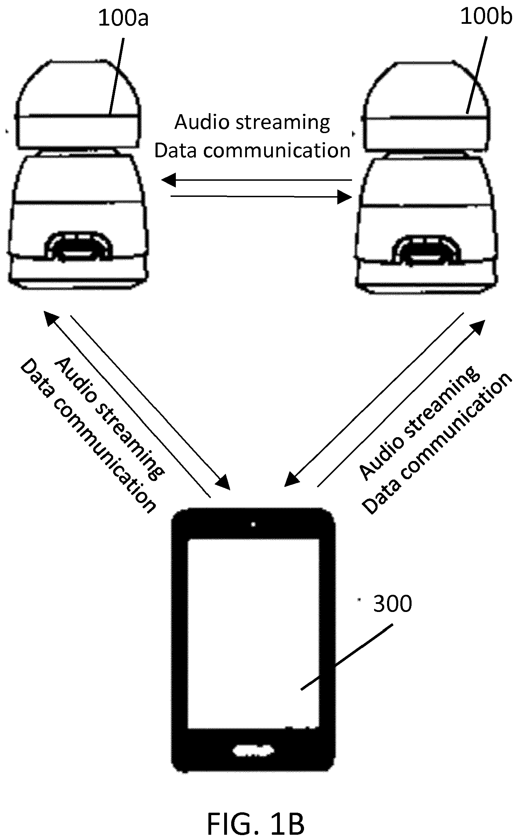

As shown in FIG. 1B, the radiofrequency communication device 100a may also communicate with another radiofrequency communication device 100b. The radiofrequency communication device 100a may transmit or receive data to or from the other radiofrequency communication device 100b via an antenna electrode. In one example, the radiofrequency communication devices are earphones. The radiofrequency communication device 100a and the other radiofrequency communication device 100b may receive the audio data via radiofrequency communication from the wireless terminal 300, respectively. Furthermore, the radiofrequency communication device 100a may send control signals to the other radiofrequency communication device 100b so that the two radiofrequency communication devices 100a, 100b may deliver synchronized music or voice according to the audio data.

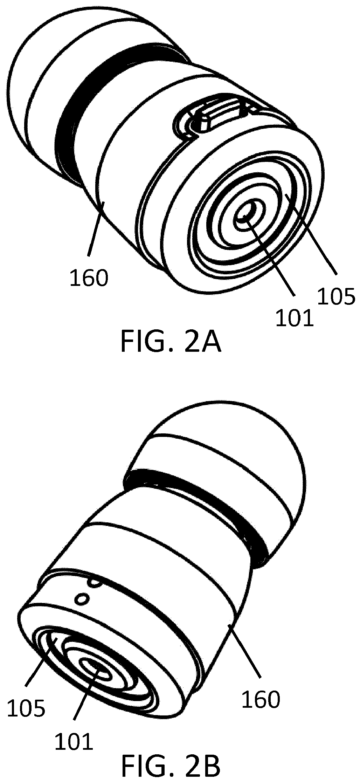

In the example as shown in FIG. 2A and 2B, the housing of the radiofrequency communication device is an earphone housing. An in-ear earphone may comprise at least an antenna electrode 101, a charging electrode 105, a transceiver module, a speaker, a battery and an in-ear earphone housing. An earphone is configured to have a wireless connection to an audio content providing device. An audio content providing device is able to generate or acquire audio data and transmit the audio data through wireless connection. The audio data may be the audio part of multi-media data. For example, the audio data may be the audio part of a video clip or a video streaming data. The audio data may be a recorded sound, such as a voice or music. The audio data may be generated from voice phone call or video phone call by a smart phone or from a multimedia program by a media center, for example a smart phone, a television, a personal computer or a sound system.

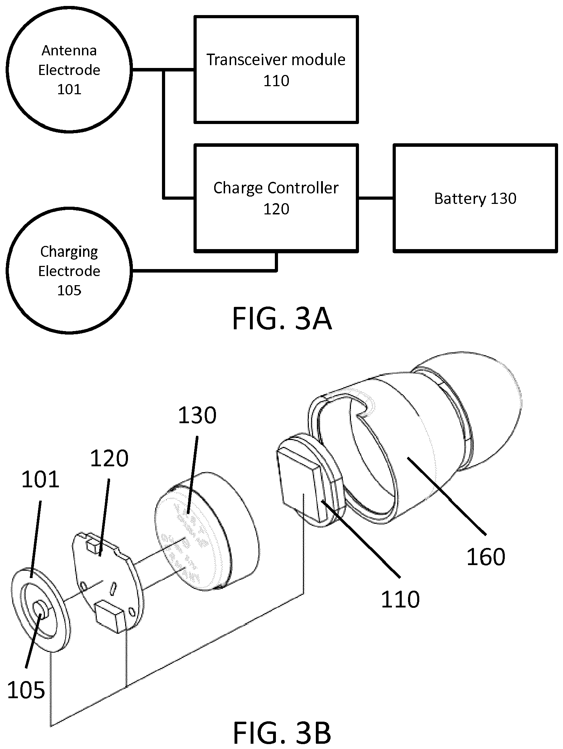

In one example as shown in FIG. 3A, a radiofrequency communication device comprise an antenna electrode 101, a charging electrode 105, a transceiver module 110, a charge controller 120, and a battery 130. The antenna electrode 101 is configured to be coupled to the transceiver module 110 to receive or transmit the electrical power from or to the transceiver module 110. The antenna electrode 101 and the charging electrode 105 are coupled to the charge controller 120. The charge controller 120 receives the electrical power from the antenna electrode 101 and the charging electrode 105 and delivers the electrical power to the battery 130. When the radiofrequency communication device 100 is in use to communicate with a wireless terminal, the transceiver module 110 transmits or receives the electrical signals from the antenna electrode 101 and the antenna electrode 101 transmits or receives electromagnetic wave to or from the wireless terminal. When the radiofrequency communication device 100 is in use to recharge the battery 130, the charge controller 120 protects the transceiver module 110 from the electric currents from the antenna electrode 101 and the charging electrode 105 and stably recharge the battery 130.

In one example as shown in FIG. 3B, a radiofrequency communication device is a wireless earphone. The wireless earphone comprises a transceiver module 110; a charge controller 120; a charging electrode 105 coupled to the charge controller 120; an antenna electrode 101 coupled to the transceiver module 110 and the charge controller 120; a battery 130 coupled to the charge controller 120; and a housing 160. The housing 160 is a wireless earphone housing. The earphone housing 160 accommodates the antenna electrode 101, the charging electrode 105, the transceiver module 110, the charge controller 120, and the battery 130.

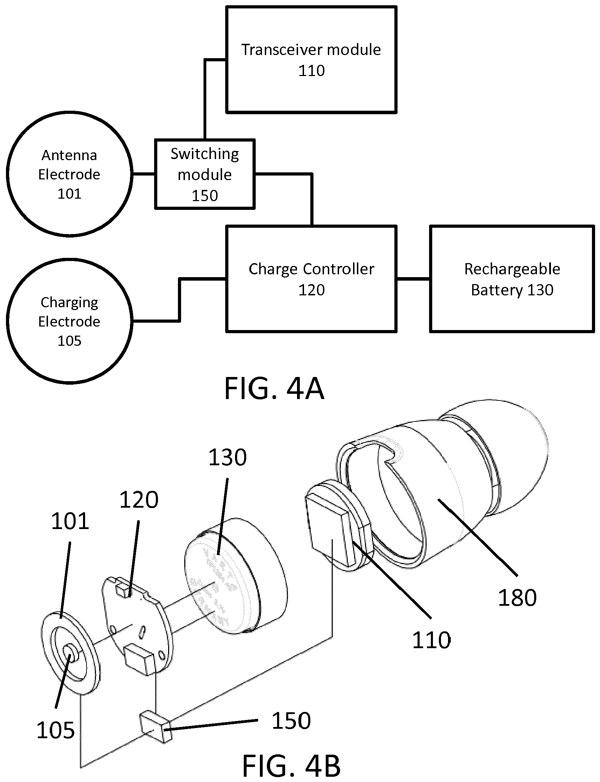

In one example as shown in FIG. 4A, a radiofrequency communication device comprise an antenna electrode 101, a charging electrode 105, a transceiver module 110, a charge controller 120, a battery 130, and a switching module 150. The switching module 150 is configured to change the electrical connection between the electrical components according to input signal. The input signal may be electrical current, electrical potential difference, or signal frequency. The switching module may be an electromechanical switch or a solid state switch, such as an integrated circuit or a relay. The antenna electrode 101 is coupled to the switching module 150. The switching module 150 is configured to determine whether the radiofrequency communication device is under charging process or communication process. During charging process, the switching module 150 allows the electrical connection between the antenna electrode 101 and charge controller 120, and reduces or may even inhibit the electrical connection between the antenna electrode 101 and the transceiver module 110. During communication process, the switching module 150 allows the electrical connection between the antenna electrode 101 and the transceiver module 110 to receive or transmit the electrical power from or to the transceiver module 110, and reduces or may even inhibit the electrical connection between the antenna electrode 101 and charge controller 120. The charging electrode 102 is coupled to the charge controller 120. The charge controller 120 receives the electrical power from the antenna electrode 101 and the charging electrode 105 and delivers the electrical power to the battery 130. When the radiofrequency communication device 100 is in use to receive signals from a wireless terminal, the switching module 150 may sense the radiofrequency signals from the antenna electrode 101 and allow the radiofrequency signals to reach the transceiver module 110. Similarly, when the radiofrequency communication device 100 is in use to transmit signals to a wireless terminal, the switching module 150 may allow the radiofrequency signals from the transceiver module 110 to the antenna electrode 101. When the radiofrequency communication device 100 is in use to recharge the battery 130, the switching module 150 protects the transceiver module 110 from the electric currents from the antenna electrode 101 and the charging electrode 105 and stably recharge the battery 130.

In one example as shown in FIG. 4B, a radiofrequency communication device is a wireless earphone. The wireless earphone comprise an antenna electrode 101, a charging electrode 105, a transceiver module 110, a charge controller 120, a battery 130, a switching module 150, and a housing 160. The housing 160 is a wireless earphone housing. The earphone housing 160 accommodates the antenna electrode 101, the charging electrode 105, the transceiver module 110, the charge controller 120, the battery 130 and the switching module 150.

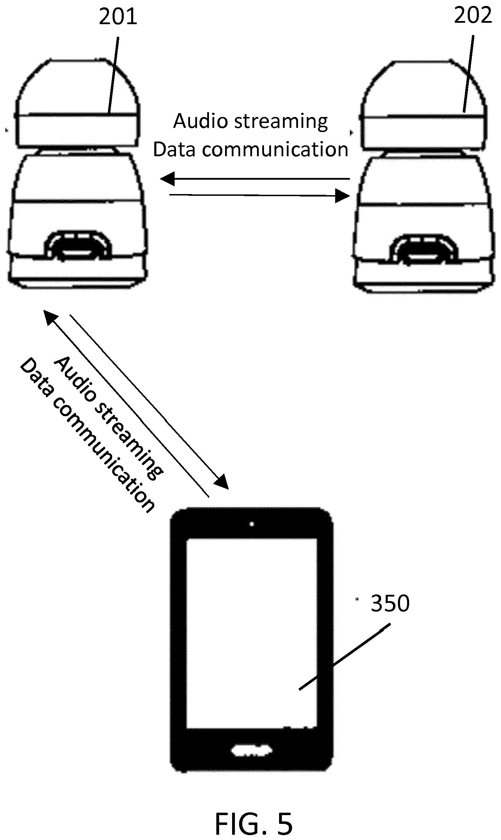

In one example as shown in FIG. 5, the radiofrequency communication device is a pair of earphones comprising a master earphone 201 and a slave earphone 202. Herein, the wireless terminal 300 is an audio content providing device. The master earphone comprises a first transceiver module; a first charge controller; a first charging electrode coupled to the first charge controller; an first antenna electrode coupled to the first transceiver module and the first charge controller; a first battery coupled to the first charge controller; and a first earphone housing. The slave earphone comprises a second transceiver module; a second charge controller; a second charging electrode coupled to the second charge controller; an second antenna electrode coupled to the second transceiver module and the second charge controller; a second battery coupled to the second charge controller; and a second earphone housing. The master earphone is coupled to the slave earphone via the first antenna electrode and the second antenna electrode.

The master earphone 201 is capable of communicating with the audio content providing device 350 and the slave earphone 202. In the example, the master earphone 201 is the left earphone and the slave earphone 202 is the right earphone. The master earphone 201 is configured to receive the audio data from the audio content providing device and convey the audio data to the slave earphone 202. Also, the master earphone may send control signals to the slave earphone to reduce bilateral audio latency and to optimize the sound effects. The master earphone 201 may be able to synchronize the master earphone 201 and the slave earphone 202 to eliminate sound playing delay.

In one example, the master earphone 201 may serve as an audio crossover to assign the stereo audio channels to the master earphone 201 and the slave earphone 202, so that earphone may play a certain part of the audio data. In some examples, the earphones having microphones provide stereo audio recording. The earphone set may have wireless communication between the left earphone and the right earphone to ensure short signal latency. The earphone set is connected with an audio content providing device. The wireless connection between the earphone set and the audio content providing device or the wireless connection within the earphone set provides audio streaming or data communication. The audio content providing device may be a mobile phone, a laptop, a television, a video game machine, or a sound system.

The antenna electrode may be configured as a monopole antenna, a dipole antenna, a closed loop antenna or an open loop antenna. The perimeter of the antenna is configured to match the designated wavelength of electromagnetic wave. The typical length of perimeter is equal to the wavelength or one quarter of the wavelength. In one example, the perimeter of a loop antenna may be substantially 30.59 millimeter in order to receive 2.45GHz radiofrequency signals. It is contemplated that the perimeter may be tolerated a range of variation to meet optimal radiation efficiency. Also, the shape of a loop antenna may be circular, elliptical, rectangular, or other geometric shape. Furthermore, the feed point connecting the transmission line(s) and the antenna may be located arbitrarily on the antenna and not limited to the examples shown in the figures.

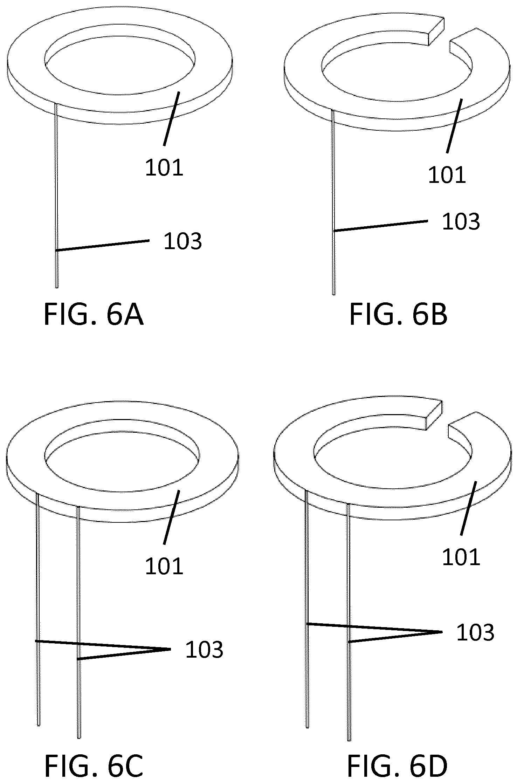

As shown in FIG. 6A-6B, the antenna electrode 101 may be a monopole antenna, which has a transmission line 103. In FIG. 6A, the antenna electrode 101 may be a closed loop antenna. In one example, the internal perimeter may be around twenty millimeter to thirty-five millimeter and the external perimeter may be twenty-five to forty millimeter, while the external perimeter is greater than the internal perimeter. In FIG. 6B, the antenna electrode 101 may be an open loop antenna. As shown in FIG. 6C-6D, the antenna electrode 101 may be a dipole antenna which has two transmission lines 103. In FIG. 6C, the antenna electrode 101 may be a closed loop antenna. In FIG. 6D, the antenna electrode 101 may be an open loop antenna. It is contemplated that the impedance of the antenna should be matched with the impedance of the transceiver module under certain working conditions.

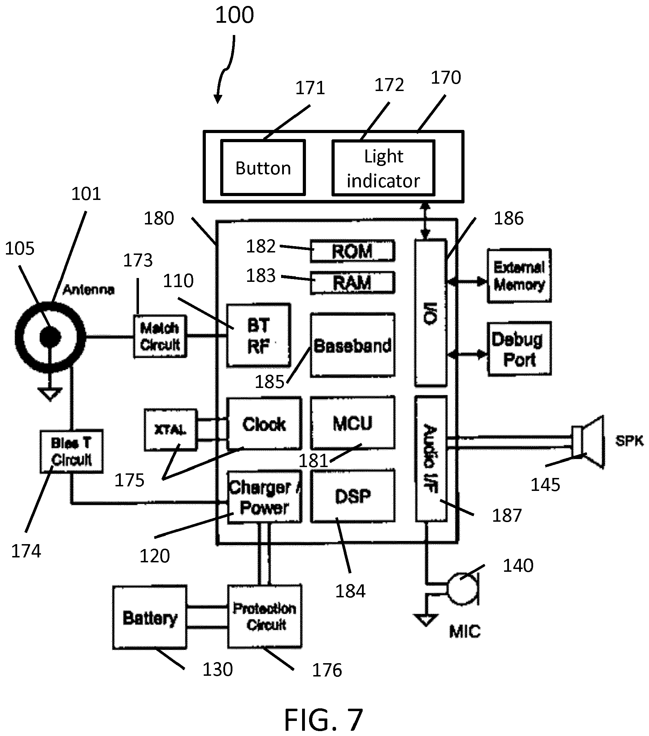

In one example as shown in FIG. 7, a radiofrequency communication device 100 is a wireless earphone. The wireless earphone comprises an antenna electrode 101, a charging electrode 105, a transceiver module 110, a charge controller 120, and a battery 130. The wireless earphone comprises a transceiver module 110; a charge controller 120; a charging electrode 105 coupled to the charge controller 120; an antenna electrode 101 coupled to the transceiver module 110 and the charge controller 120; a battery 130 coupled to the charge controller 120; and a housing 160. The antenna electrode 101 is coupled to the transceiver module 110 via a match circuit 173 to ensure that the impedance between the antenna electrode 101 and the transceiver module 110. The antenna electrode 101 is coupled to the charge controller 120 via a bias T circuit 174 to shunt the direct electric current to the charge controller 120 when the wireless earphone 100 is in use to recharge the battery 130. The bias T circuit 174 may also be coupled to the transceiver module 110 to shunt the radiofrequency current to the transceiver module 110. In some examples, the bias T circuit 174 may be replaced with a switching module and the switching module is coupled to the transceiver module 110.

The wireless earphone may further comprise a microcontroller 181, a memory (read-only memory182, random access memory 183), a digital signal processor 184, baseband module 185, an input/output device 186, an audio interface 187, a user interface 170, a microphone 140, a speaker 145, a crystal clock 175, and a protection circuit 176. In one example, many electronic components may be embedded on a printed circuit board as a radiofrequency module for ease of mass production and volume minimization of the wireless earphone. The user interface 170 may comprise a button 171 configured to receive user input and a light indicator 172 configured to deliver indicating signals. The microphone 140 may be coupled to the audio interface 187 to receive environmental sound or the user's voice. The audio interface 187 may have noise cancellation function to eliminate ambient noise so that the speaker 145 is capable of delivering high quality sound or may amplify certain frequency range of sound, for example, human speech. With the microphone 140, the wireless earphone 100 may serve as a wireless intercom, a hearing aid or a sound amplifying device.

Charging contacts are essential electrical interfaces for restoring battery energy of an electronic device. The charging contacts are configured to couple the electronic device to a power source. People still confront many problems when using an electronic device with charging contacts. For example, most electronic devices have to be place in a specific direction to fit a charging dock and thus forms an adequate electrical connections between a battery in the electronic device and a battery charger. Such a directional limitation may lead to inconvenience, bad user experience, and even charge failure.

A rechargeable system comprises a rechargeable device and a charging case. The rechargeable device comprises a battery, a charge controller, a first charging contact, a second charging contact and a device housing. The battery is coupled to a charge controller and the charge controller is coupled to the first charging contact and the second charging contact. The charging case may comprise a battery charger, a first dock electrode, a second dock electrode and a case housing. The battery charger is coupled to the first dock electrode and the second dock electrode. When the rechargeable system is under charging process, the rechargeable device is coupled to the charging case via the first charging contact, the second charging contact, the first dock electrode, and the second dock electrode, wherein the first charging contact is coupled to the first dock electrode and the second charging contact is coupled to the second dock electrode.

The charging case is configured to recharge the battery of a rechargeable device. The battery charger may comprise a power management module, a battery or an external power connection port. The external power connection port is configured to receive external power to recharge the battery. For example, the external power connection port is a universal serial bus (USB) port or a micro-USB port. The case housing comprises at least a dock base to provide mechanical connection to device housing of the rechargeable device and fix the position of the first dock electrode and the second dock electrode. The first dock electrode and the second dock electrode provide electrical connection to the rechargeable device. The case housing may further comprises a dock rack to support and stabilize the device housing. The case housing may further comprises a drawer assembly and a containing box, wherein the drawer assembly, comprising the dock base and the dock rack, is configured to be accommodated by the containing box.

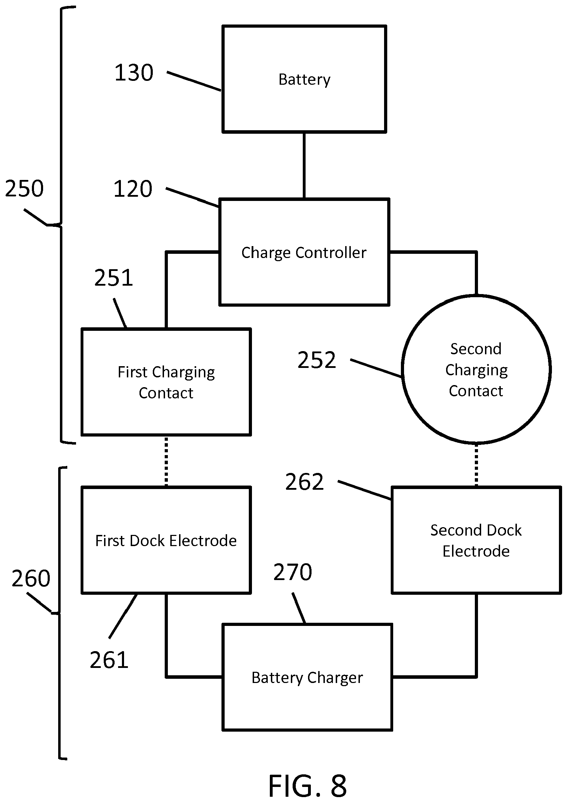

As shown in FIG. 8, a charging module may comprise a first charging contact 251, a second charging contact 252, a first dock electrode 261, a second dock electrode 262, a charge controller 120, a battery 130, and a battery charger 270. The first charging contact 251 and the second charging contact 252 are coupled to the cathode or the anode of the charge controller 120. The first dock electrode 261 and the second dock electrode 262 are coupled to the cathode and the anode of the battery charger 270. The dotted lines indicate electrical connections between the first charging contact 251 and the first dock electrode 261, or between the second charging contact 252 and the second dock electrode 262 when a charging circuit is complete.

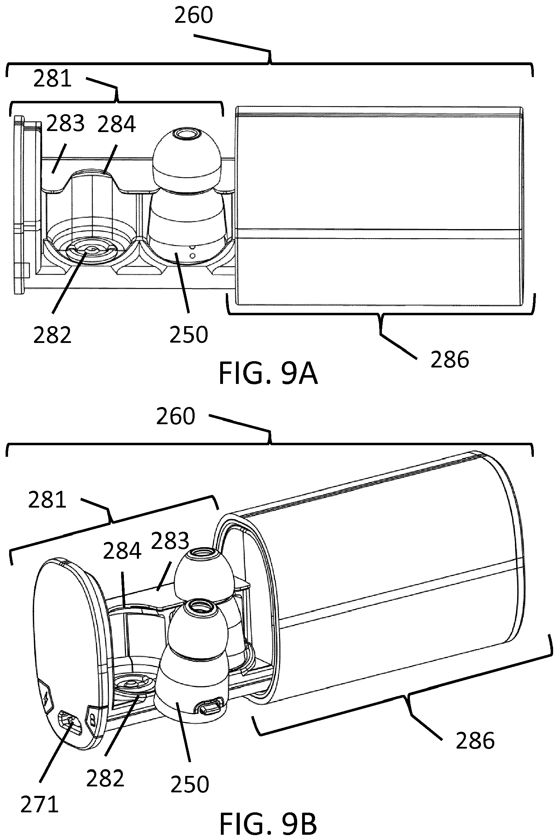

In one example as shown in FIG. 9A, a rechargeable system comprises a rechargeable device 250 and a charging case 260, wherein the rechargeable device 250 is a wireless earphone and the charging case 260 comprising a drawer assembly 281 and a containing box 286. The drawer assembly 281 comprising a dock rack 283 and a dock base 282. The dock rack 283 has a neck portions 284 to support the device housing of the rechargeable device 250. In the example, the dock rack 283 may have two neck portions 284 for two rechargeable device 250. The charging case 260 is shown with an open position and one earphone is located on the dock rack 283 of the drawer assembly 281.

In FIG. 9B, the charging dock is a directionless charging dock compatible with the directionless charging port of the earphone. The electrodes of the charging dock and the electrodes of the charging port are arranged in radial symmetry. As a result, the user may place the earphone on the charging dock in an arbitrary direction.

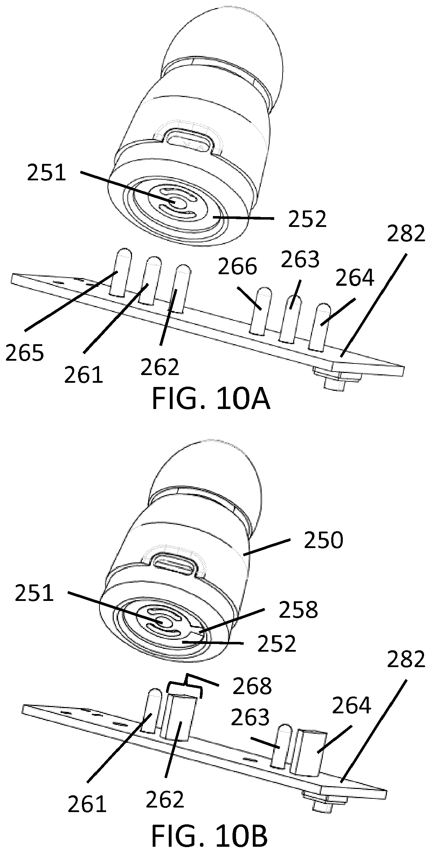

As shown in FIG. 10A, a charging module may comprise a first charging contact 251, a second charging contact 252, a first dock electrode 261, a second dock electrode 262, and a third dock electrode 265. The first charging contact 251 may be a conductive pin with a spring cushion to ensure electrical connection to the first dock electrode 261. The second charging contact 252 is configured in an annular shape around the first charging contact 251. There may be an annular shape insulation wall prevents the first charging contact 251 and the second charging contact 252 from short circuit. Also, the insulation wall may provide mechanical support so that the location of the first dock electrode 261 is correctly in contact with the first charging contact 251 and not biased from the center of the second charging contact 252. One of the second dock electrode 262, and the third dock electrode 265 is ensured to have electrical connection to the second charging contact 252. As a result, the charging module completes a charging circuit in regardless of the direction.

As shown in FIG. 10B, a charging module may comprise a first charging contact 251, a second charging contact 252, a first dock electrode 261, a second dock electrode 262, and a battery charger(not shown in the figure). The first charging contact 251 may be a conductive pin with a spring cushion to ensure electrical connection to the first dock electrode 261. The second charging contact 252 is configured in an annular shape with an open gap 258. The width 268 of the second dock electrode 262 is equal to or larger than the open gap 258 of the second charging contact 252. There may be an annular shape insulation wall prevents the first charging contact 251 and the second charging contact 252 from short circuit. Also, the insulation wall may provide mechanical support so that the location of the first dock electrode 261 is correctly in contact with the first charging contact 251 and not biased from the center of the second charging contact 252. The second dock electrode 262 is ensured to have electrical connection to the second charging contact 252. As a result, the charging module completes a charging circuit in regardless of the direction.

A user interface may be a user input module or a user output module. The user input module is configured to receive the user input by mechanical force. In one example, the user input module may be a control button located on the body of an earphone. A control button may be a push-button or a toggle switch. The user output module is configured to send out visual, audio or vibrational signals to inform the user with the states of the earphone. In one example, the visual output module may be a light emitting diode (LED). In one example, the speaker may also have the function to inform the user. The speaker may deliver a voice message, "device pairing", when the earphone is at device pairing state.

Input modes are applicable with the presentation of a control button. An input mode comprise a certain duration of a mechanical input disposed on a control button. Within present disclosure, a press is defined as a control button being activated in a certain period of time. Preferably, a control button is activated when a mechanical force is disposed on the control button and thus the underlying electrical circuit is connected. A control button is inactivated when a mechanical force is removed from the control button.

An input mode is the combination of a certain duration of activation and inactivation of the control button. An input mode may be a short input, a double input, a long input, a very long input, or an extra-long input. In one example, a short input indicates the control button is activated shorter than a duration of 0.5 seconds. A double input indicates the control button is activated with two consequent short inputs spaced with a short duration of inactivation of the control button, for example 0.5 seconds. A long input indicates the control button is activated around two seconds. A very-long input indicates the control button is activated with a duration of three to four seconds. An extra-long input indicates the control button is activated with a duration of six to seven seconds.

An input mode may switch the earphone from a working state to anther working state. When an input mode is recognized by the microcontroller, the state of the earphone may be switch to a certain working state. A working state of an earphone may be a power-on state, a power-off state, a device pairing state, a media state, a phone call state. Power-off state indicates the power of the earphone is inactive or stays low consumption for reserving battery energy. Power-on state indicates the earphone is ready for connection with an audio content providing device. Media state indicates the earphone is connecting with an audio content providing device having an active multi-media application. Phone call state indicates the earphone is connecting audio data from an audio content providing device having a phone connection. Device pairing state indicates the earphone is seeking for the connection with an audio content providing device.

An input mode may trigger a certain function under corresponding state. A function may be a media control function, such as content switching, volume adjustment, media-play, or media-pause, or may be a phone call control function, such as call answering, call rejection, or call cancelling.

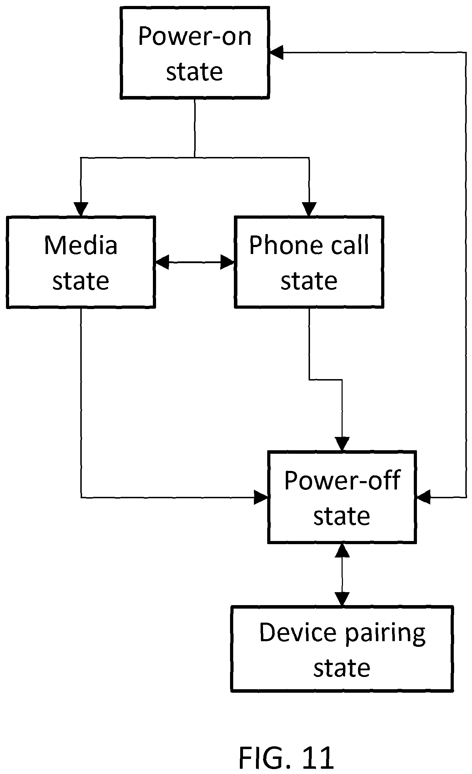

In one example as shown in FIG. 11, one working state of the earphone may switch to another working state. In one example, the earphone may start at power-off state and may be switched to device paring state or power-on state. The earphone at power-on state may be switched to media state or phone call state. The earphone at media state may be switched to phone call state and may be switched back to media state. All working states may be switched to power-off state.

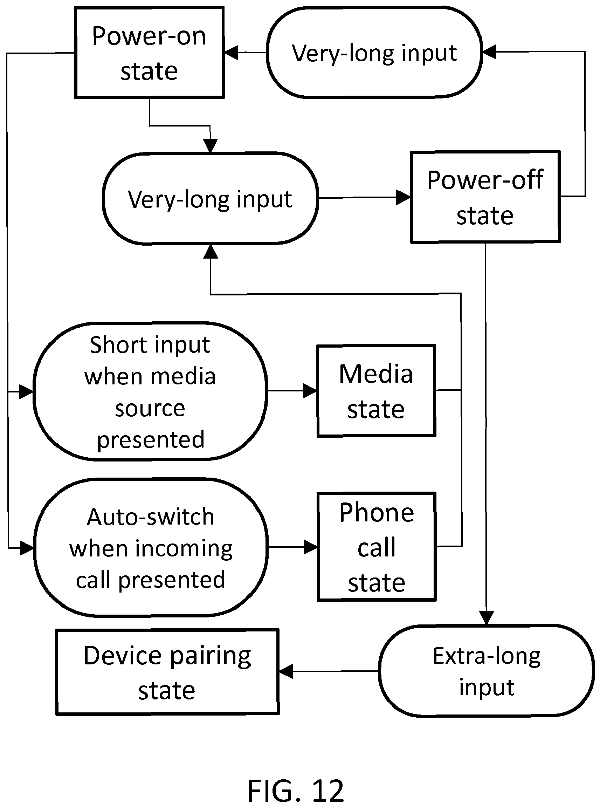

In one example as shown in FIG. 12, one working state of the earphone may switch to another working state by an input mode. In one example, the earphone at power-off state may be switched to device paring state by extra-long input or may be switched to power-on state by very-long input. The earphone at power-on state may be switched to media state by short input when media source presented. All working states may be switched to power-off state by very-long input.

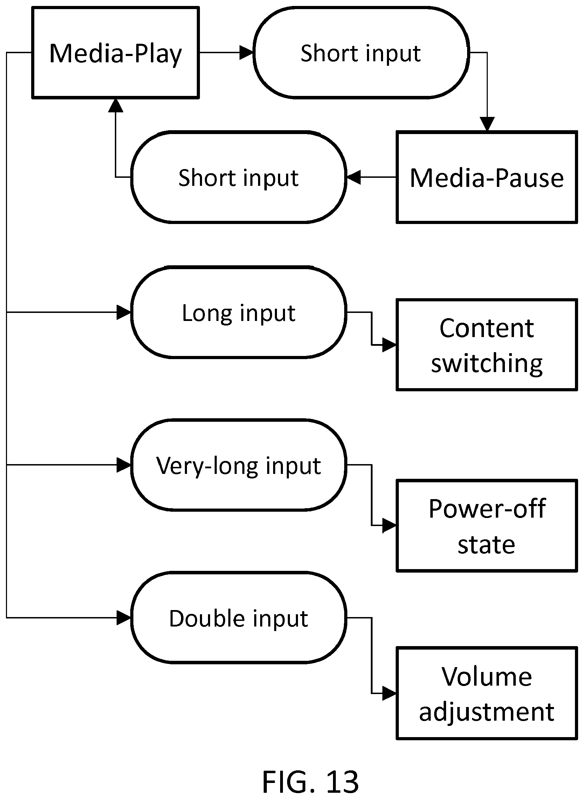

In one example as shown in FIG. 13, an input mode may trigger a media control function under media state. A media control function may be content switching, volume adjustment, media-play, or media-pause. A short input may trigger media-play function when a media content is available to play or when a media content is paused. A short input may trigger media-pause function when a media content is playing. A long input may trigger content switching function when a media content is playing. Content switching function may forward the media content to next section or backward the media content to previous section. For example, a long input applied on the control button of the right earphone forwards to the next song, and a long input applied on the control button of the left earphone backwards the previous song. A double input may trigger volume adjustment function to adjust audio volume. For example, a double input applied on the control button of the right earphone increases audio volume, and a long input applied on the control button of the left earphone decrease audio volume.

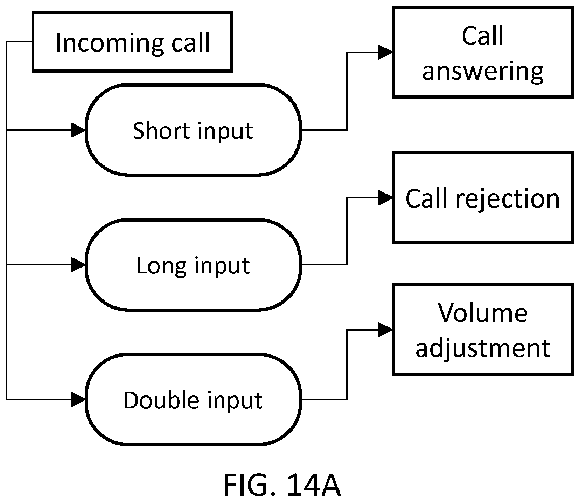

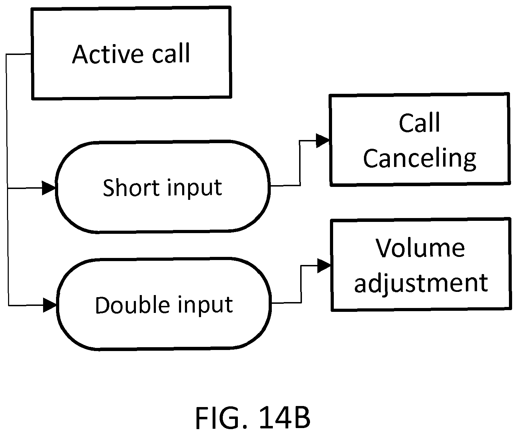

In one example as shown in FIG. 14A and 14B, an input mode may trigger a phone call control function under phone call state. A phone call control function may be call answering, call rejection, call canceling, and volume adjustment. When an incoming call (FIG. 14A), a short input triggers call answering function, a long input triggers call rejection function, and a double input triggers volume adjustment function. When active call (FIG. 14B), a short input triggers call canceling function, and a double input triggers volume adjustment function.

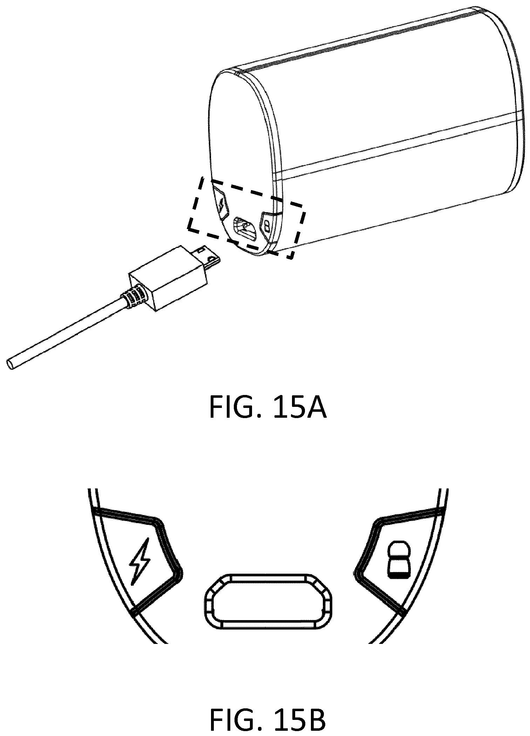

In one example as shown in FIG. 15A and 15B, the charging case has a first charging indicator and a second charging indicator. In one example, the earphone case has a USB port 271 for power charge. When the charging case is connected to a power source with a USB wire, the earphone case may have or may not have the earphone on the charging dock. FIG. 15B is the enlarged view of the dotted line region in FIG. 15A. In one example, the earphone case has charging indicators. The charging indicators may be a case charging indicator and an earphone charging indicator. The case charging indicator may show the corresponding charging status, such as "not charging", "under charging", or "charging complete". The earphone charging indicator may show the corresponding battery status of the earphones.

The examples shown and described above are only examples. Therefore, many such details are neither shown nor described. Even though numerous characteristics and advantages of the present technology have been set forth in the foregoing description, together with details of the structure and function of the present disclosure, the disclosure is illustrative only, and changes may be made in the detail, including in matters of shape, size and arrangement of the parts within the principles of the present disclosure up to, and including the full extent established by the broad general meaning of the terms used in the claims. It will therefore be appreciated that the examples described above may be modified within the scope of the claims.

## Claims

1. A radiofrequency communication device, comprising:
a transceiver module;
a charge controller;
a charging electrode coupled to the charge controller;
an antenna electrode coupled to the transceiver module and the charge controller;
a battery coupled to the charge controller; and
a housing.

2. The radiofrequency communication device according to claim 1, wherein the housing is an earphone housing.

3. The radiofrequency communication device according to claim 1, wherein the antenna electrode is a monopole antenna.

4. The radiofrequency communication device according to claim 1, wherein the antenna electrode is a dipole antenna.

5. The radiofrequency communication device according to claim 1, wherein the antenna electrode is a closed loop antenna.

6. The radiofrequency communication device according to claim 1, wherein the antenna electrode is an open loop antenna.

7. The radiofrequency communication device according to claim 1, further comprising a switching module, wherein the switching module is coupled to the antenna electrode, the transceiver module and the charge controller.

8. A radiofrequency communication device, comprising:
a master earphone comprising a first transceiver module;
a first charge controller;
a first charging electrode coupled to the first charge controller;
a first antenna electrode coupled to the first transceiver module and the first charge controller;
a first battery coupled to the first charge controller; and
a first earphone housing; and
a slave earphone comprising a second transceiver module;
a second charge controller;
a second charging electrode coupled to the second charge controller;
a second antenna electrode coupled to the second transceiver module and the second charge controller;
a second battery coupled to the second charge controller; and
a second earphone housing; wherein
the master earphone is coupled to the slave earphone via the first antenna electrode and the second antenna electrode.

9. The master earphone according to claim 8, further comprising a switching module, wherein the switching module is coupled to the first antenna electrode, the first transceiver module and the first charge controller.

10. The slave earphone according to claim 8, further comprising a switching module, wherein the switching module is coupled to the second antenna electrode, the second transceiver module and the second charge controller.
